Europäisches Patentamt

European Patent Office

Office européen des brevets

(11) Numéro de publication: **0 161 959**
**A1**

## (12) DEMANDE DE BREVET EUROPEEN

(21) Numéro de dépôt: 85400701.0

(22) Date de dépôt: **09.04.85**

(51) Int. Cl.⁴: **G 01 P 3/54**

(30) Priorité: **11.04.84 FR 8405728**

(43) Date de publication de la demande: **21.11.85**
**Bulletin 85/47**

(84) Etats contractants désignés: **AT BE CH DE GB IT LI LU NL SE**

(71) Demandeur: **HOUILLERES DU BASSIN DE LORRAINE (Etablissement public), 2, rue de Metz, F-57802 Freyming-Merlebach (Moselle) (FR)**

(72) Inventeur: **Pitance, Gilbert, 3, rue d'Alsace, F-57150 Creutzwald (FR)**

(74) Mandataire: **Chevallier, Robert Marie Georges, Cabinet BOETTCHER 23, rue La Boétie, F-75008 Paris (FR)**

(54) Dispositif de mesure directe de la vitesse linéaire d'un câble métallique à torons.

(57) Sur un noyau (4) perméable magnétiquement et ayant des dents (9, 5, 6, 10) dirigées vers le câble métallique (1) se trouvent un enroulement d'excitation (3) qui crée un champ magnétique empruntant en partie le câble (1) et deux enroulements de mesure (7, 8) qui fournissent une tension fluctuante en fonction du pas (P) des torons (2) et de la vitesse réelle de défilement du câble (1) de sorte que la mesure de la fréquence des fluctuations permet de calculer la vitesse réelle de ce câble.

0161959

Dispositif de mesure directe de la vitesse lénéaire d'un câble métallique à torons.

L'invention a pour objet un dispositif qui sert à mesurer directement la vitesse linéaire de défilement d'un câble métallique toronné.

Dans de nombreuses installations industrielles, et principalement dans les mines, on utilise des machines comprenant des organes mobiles lourds déplacés à des vitesses de plusieurs dizaines de kilomètres à l'heure, sur des distances importantes, à l'aide de câbles métalliques. Ces derniers ont de gros diamètres, par exemple de 40 à 80mm et plus, et sont réalisés par la réunion de plusieurs torons de fils individuels enroulés ensemble hélicoïdalement avec un pas déterminé constant.

Il est essentiel, surtout au point de vue de la sécurité, que la vitesse réelle de défilement de ces câbles soit contrôlée avec une précision suffisante. A cet égard, la mesure classique de la vitesse de rotation des organes d'entraînement du câble n'offre pas une garantie suffisante parce que, l'entraînement se faisant uniquement par adhérence, elle est fatalement entachée de l'erreur due au glissement du câble. Ce mode de mesure ne permet pas de détecter les variations rapides du glissement, ni même le patinage total du câble qui sont pourtant des phénomènes annonciateurs d'une situation susceptible de devenir rapidement dangereuse.

L'invention a pour but principal d'apporter un dispositif de mesure capable de faire connaître directement la vitesse linéaire d'un câble métallique à torons mesurée directement sur ce câble avec une précision suffisante à faire apparaître toute variation pouvant mettre en cause la sécurité du personnel et du matériel.

Un dispositif de mesure conforme à l'invention comprend un générateur de champ magnétique disposé à proximité du câble métallique, sans contact matériel avec lui, pour que les lignes de force du champ magnétique empruntent au moins en partie le câble métallique, et au moins un enroulement de mesure disposé à proximité du câble, sans contact matériel avec lui, pour être influencé par les fluctuations du champ magnétique dues au déplacement linéaire de ce câble.

De préférence, le générateur de champ magnétique est un enroulement d'excitation alimenté en courant continu, bien que tout autre type de générateur de champ magnétique puisse être employé.

Selon un mode de réalisation de l'invention, l'enroulement d'excitation et l'enroulement de mesure sont montés l'un à la suite de l'autre dans le sens longitudinal du câble ; avantageusement les deux enroulements sont réalisés sur un noyau commun perméable magnétiquement ayant des dents proches du câble métallique pour que celui-ci serve à la fermeture du circuit magnétique entre ces dents. Cependant, on pourrait prévoir de réaliser l'enroulement de mesure indépendamment du générateur de champ magnétique et de le monter dans une zone où il serait influencé par les fluctuations du champ magnétique dues au déplacement du câble.

Dans un exemple préféré de réalisation de l'invention, le noyau commun présente une dent à chacune de ses extrémités et une dent intermédiaire séparant l'enroulement d'excitation et l'enroulement de mesure ; en outre, il existe de préférence deux enroulements de mesure disposés de part et d'autre de l'enroulement d'excitation dans le sens longitudinal du câble métallique, chacun des enroulements de mesure étant séparé de l'enroulement d'excitation par une dent du noyau magnétique.

La bobine de mesure, ou les deux bobines quand il en existe deux, sont réunies à un circuit sensible à la force électromotrice induite suivi d'un circuit mesureur de la fréquence à laquelle varie l'amplitude de cette force électromotrice ; ensuite se trouve un calculateur qui affiche directement la vitesse correspondante du câble en fonction de cette fréquence et du pas des torons dans le câble métallique.

Il a été constaté qu'il existe aussi un rapport entre le pas $P$ des torons dans un câble métallique et la distance $L$ séparant le milieu de chaque dent contenant entre elles un enroulement de mesure. Cette distance $L$ doit être supérieure à 0,5 P environ et inférieure à 1,5 P environ. Ainsi, un dispositif selon l'invention dans lequel L a une valeur de 30 mm pourra servir à mesurer la vitesse linéaire de câbles métalliques présentant de 16 à 50 torons par mètre de longueur, quel que soit le diamètre de ces câbles. De préférence aussi chaque dent du noyau magnétique doit avoir dans un sens perpendiculaire au sens de défilement du câble métallique une épaisseur de l'ordre du quart du diamètre de ce dernier.

On donnera maintenant, sans intention limitative et sans exclure aucune variante, une description d'un exemple préféré de réalisation. On se reportera aux dessins annexés dans lesquels :

- la figure 1 est une représentation schématique d'un dispositif conforme à l'invention installé à proximité d'un câble métallique toronné,
- les figures 2, 3, 4 sont des graphiques montrant la fréquence du signal fourni par l'enroulement de mesure respectivement à trois vitesses différentes de défilement du câble métallique de la figure 1.

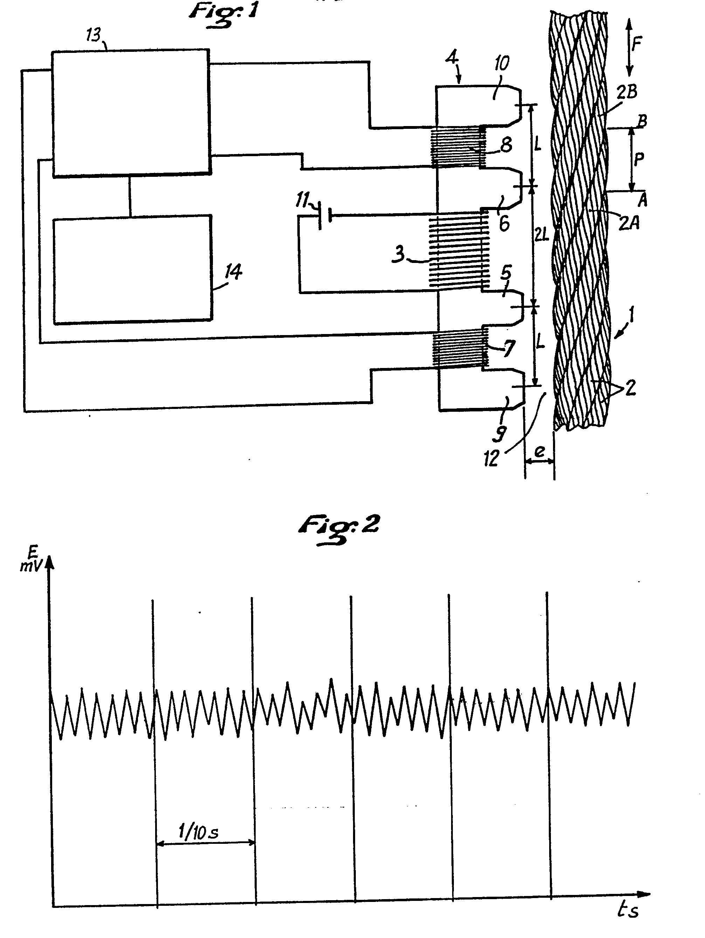

Sur la figure 1 on peut voir un câble métallique 1 composé de plusieurs torons enroulés hélicoïdalement de sorte que la surface de ce câble n'est pas lisse mais présente une structure irrégulière répétitive. Sur une même génératrice du câble métallique 1 on observe en un point A le début d'un toron 2A puis en un point B la fin de ce toron et le début du toron suivant 2B, et ainsi de suite de sorte qu'il existe un pas P, égal à la distance des points A et B, des torons qui apparaissent successivement sur cette génératrice.

Le dispositif de l'invention comprend un enroulement d'excitation 3 réalisé sur un noyau feuilleté, en tôles pour transformateur par exemple, désigné par la référence générale 4, ayant un profil général en U qui fait apparaître deux dents 5, 6 entre lesquelles est contenu l'enroulement d'excitation 3. Le noyau 4 est prolongé au-delà des dents 5, 6 pour recevoir un premier enroulement de mesure 7 au-delà de la dent 5 et un

4

second enroulement de mesure 8 au-delà de la dent 6. Après les enroulements de mesure 7, 8 le noyau 4 se termine par une dent extrême 9, 10 identique aux dents 5, 6. Ces dernières sont communes à la partie du noyau qui porte l'enroulement d'excitation 3 et aux parties extrêmes qui portent les enroulements de mesure 7, 8.

Entre les milieux des dents 6 et 10 qui contiennent entre elles l'enroulement de mesure 8, il existe une distance $L$ de même qu'entre les milieux des dents 5 et 9 qui contiennent entre elles l'enroulement de mesure 7. Une distance identique pourrait être prévue entre les milieux des dents 5 et 6 qui contiennent entre elles l'enroulement d'excitation 3 mais il est préférable, comme dans le présent exemple, de prévoir une longueur 2 $L$ entre ces dents 5 et 6, ce qui correspond à une longueur double, au moins, de l'enroulement d'excitation 3 en comparaison de chacun des enroulements de mesure 7, 8.

Si l'on veut obtenir un fonctionnement satisfaisant du dispositif de l'invention, il est préférable de choisir la distance $L$ en fonction du pas $P$ des torons de telle sorte que cette distance $L$ soit supérieure à 0,5 $P$ et inférieure à 1,5 $P$.

Dans un sens perpendiculaire au plan de la figure 1, qui est aussi le plan dans lequel le câble 1 est supposé être entraîné en défilement dans les deux sens opposés comme indiqué par une flèche double F, le noyau 4 a une épaisseur qui est en rapport avec le diamètre du câble 1. Ce rapport n'est pas véritablement critique mais il est préférable que cette épaisseur soit sensiblement égale environ au quart du diamètre du câble métallique 1. Dans le présent exemple, pour un câble métallique 1 de 45 mm de diamètre, le noyau 4 était composé de 15 tôles d'une épaisseur de 0,8 mm lui donnant une épaisseur de 12 mm.

L'enroulement d'excitation 3 est alimenté en courant continu par une source 11 ; par exemple on peut réaliser un enroulement de 250 spires à l'aide d'un fil de 1,50 mm de diamètre pour un courant d'alimentation de 3A.

Le noyau 4 devient donc un circuit magnétique qui se ferme en empruntant les dents 5, 6 et 9, 10 dirigées vers le câble métallique 1 de sorte que le flux magnétique emprunte aussi au moins en partie le câble 1 ; il existe entre le noyau 4 et le câble 1 un entrefer 12 d'une largeur $e$ qu'il est souhaitable de réduire le plus possible. Mais il faut tenir compte que le câble métallique 1 est l'objet de battements pendant ses mouvements ; il est préférable de placer le noyau 4 dans une zone où le câble métallique 1 est retenu contre les battements, ce qui se rencontre, par exemple, sur les poulies, notamment sur les poulies d'entraînement. En effet, comme l'entraînement se fait par adhérence, ces poulies sont souvent couvertes d'une garniture en élastomère qui s'oppose à ce que le flux magnétique passe préférentiellement à travers la masse métallique de la poulie. En outre, comme ces poulies ont un grand diamètre, de l'ordre de 1,50 m, l'incurvation du câble métallique 1 qui passe autour d'une telle poulie devient négligeable sur une longueur égale à celle du noyau 4 qui est de l'ordre de 120 mm. On peut admettre que l'entrefer 12 a une largeur $e$ pratiquement constante. De toute façon, si l'entrefer 12 a une largeur en regard des dents intermédiaires 5 et 6 différente de celle qu'il a en regard des dents extrêmes 9, 10, la différence n'est pas critique à condition qu'elle reste substantiellement constante, ce qui s'obtient quand le câble métallique 1 est plaqué contre la poulie.

Il a été constaté en pratique qu'un entrefer 12 d'une largeur $e$ sensiblement égale au quart du diamètre du câble métallique 1 est une valeur satisfaisante ; l'entrefer 12 pourrait être égal à la moitié du diamètre du câble métallique 1 cependant il est préférable qu'il ne dépasse pas 25mm.

Le circuit magnétique réalisé par le noyau 4, le câble métallique 1 et l'entrefer 12 est un circuit à réluctance variable en raison des variations périodiques qu'y apportent les torons 2 qui se succèdent avec un pas $P$ en face des dents 5, 6, 9, 10. Les variations correspondantes du flux magnétique induisent dans les enroulements de mesure 7 et 8 une force électromotrice variable à une fréquence qui est directement en rapport avec le pas $\underline{P}$ et avec la vitesse réelle de défilement du câble métallique 1 devant le noyau 4.

Dans le présent exemple, le câble métallique 1, d'un diamètre de 48 mm comme on l'a dit, présentait 24 torons sur une longueur de 1 m d'une génératrice.

Les enroulements de mesure 7, 8 sont réunis aux bornes d'entrée d'un appareil 13 comprenant un circuit sensible à la force électromotrice induite dans ces enroulements et un circuit mesureur de la fréquence à laquelle varie l'amplitude de cette force électromotrice ; l'appareil 13 est suivi d'un appareil 14 comprenant un calculateur et un moyen d'affichage indiquant directement la vitesse de défilement du câble métallique 1, en m/s par exemple.

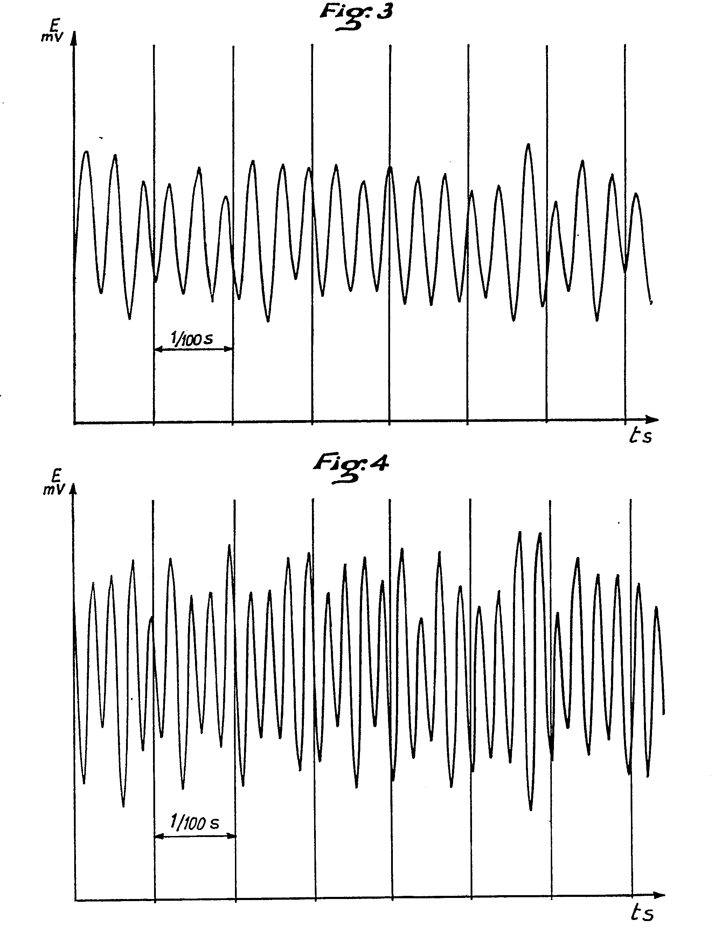

La figure 2 montre l'enregistrement de la force électromotrice induite dans les enroulements de mesure 7, 8 par le câble métallique 1, le temps t étant porté en abscisses en secondes avec indication par des traits parallèles des tranches successives de 1/10 s ; l'amplitude E est portée en ordonnées en mV. Sur ce graphique on voit qu'il se produit 7 alternances en 1/10 s soit une fréquence de 70 Hz due à 24 torons par mètre de longueur du câble, soit une vitesse linéaire réelle de 70:24 = 2,91 m/s pour une vitesse théorique de 3 m/s. Sur les figures 3 et 4, analogues à la figure 2 avec la différence que les traits parallèles indiquent des tranches successives de 1/100 s, on relève respectivement 2,8 alternances et 4 alternances, soit 280 Hz et 400 Hz, c'est-à-dire 11,66 m/s et 16,66 m/s pour des vitesses théoriques de 12 m/s et 17 m/s.

Il n'est pas obligatoire que le noyau 4 porte deux enroulements de mesure 7, 8 ; un seul enroulement de mesure 7 pourrait suffire, le noyau n'ayant alors que les trois dents 10, 6 et 5. Il est préférable d'utiliser deux enroulements de

7

mesure extrêmes 7, 8, qui ont des rôles symétriques, parce qu'on peut les brancher en série afin d'augmenter la tension recueillie ; avec certains câbles, il peut être possible aussi, en comparant les signaux fournis par l'un et l'autre enroulement 7, 8 de détecter le sens de défilement du câble métallique 1.

Outre que le dispositif de l'invention permet de détecter tout glissement ou tout patinage du câble par rapport à la poulie motrice, il a aussi l'avantage de détecter la rupture de l'âme du câble. Une telle rupture se traduit par une augmentation brusque et localisée du pas des torons, donc par une diminution correspondante également localisée et brutale de la fréquence du signal. Un circuit comparateur incorporé à l'un des appareils 13, 14 est capable de signaler dès qu'elle survient une variation de ce genre annonciatrice de danger.

0161959

8

<u>REVENDICATIONS</u>

1°/ Dispositif pour la mesure de la vitesse linéaire de défilement d'un câble métallique (1) à torons (2) se succédant le long d'une génératrice avec un pas (P) caractérisé en ce qu'il comprend un générateur (3) de champ magnétique disposé à proximité de la surface du câble (1) sans contact avec lui, créant un champ magnétique qui emprunte en partie le câble métallique (1) et au moins un enroulement de mesure (7) disposé à proximité dudit câble (1) dans une zone où il est influencé par les fluctuations du champ magnétique dues au déplacement linéaire du câble métallique (1), l'enroulement de mesure (7) étant relié à un appareil (13) mesurant la fréquence des fluctuations et affichant la vitesse du câble métallique (1).

2°/ Dispositif selon la revendication 1 caractérisé en ce que le générateur de champ magnétique est un enroulement d'excitation (3) réalisé autour d'un noyau (4) perméable magnétiquement ayant deux dents extrêmes (5, 6) au moins dirigées vers le câble métallique (1) et séparées de ce dernier par un entrefer (12) de largeur (e).

3°/ Dispositif selon la revendication 1 caractérisé en ce que l'enroulement de mesure est constitué par un enroulement (7) réalisé autour d'un noyau (4) perméable magnétiquement ayant deux dents extrêmes (9, 5) dirigées vers le câble métallique (1) et séparées de ce dernier par un entrefer (12) de largeur (e).

4°/ Dispositif selon la revendication 1 caractérisé en ce que le générateur de champ magnétique est un enroulement d'excitation (3) et l'enroulement de mesure (7) comprend deux enroulements (7, 8), ces trois enroulements (3, 7, 8) étant réalisés autour d'un noyau magnétique commun (4) perméable magnétiquement ayant au moins quatre dents (5, 6, 9, 10) dirigées vers le câble et séparées de ce dernier par un entrefer (12) de largeur (e).

5°/ Dispositif selon la revendication 4 caractérisé en ce que deux dents (5, 6) se trouvent entre l'enroulement d'excitation (3) et un enroulement de mesure (7, 8) respectif et deux dents (9, 10) se trouvent aux extrémités opposées du noyau (4) au-delà d'un enroulement de mesure (7, 8) respectif.

6°/ Dispositif selon la revendication 5 caractérisé en ce que les deux enroulements de mesure (7, 8) sont reliés en série à l'appareil (13).

7°/ Dispositif selon la revendication 2 caractérisé en ce que le noyau a une épaisseur approximativement égale au quart du diamètre du câble métallique (1).

8°/ Dispositif selon l'une quelconque des revendications 2 à 4 caractérisé en ce que l'entrefer (12) a une largeur comprise entre le quart et la moitié du diamètre du câble métallique (1), sans dépasser 25 mm environ.

9°/ Dispositif selon la revendication 4 caractérisé en ce que la distance (L) séparant le milieu de chaque dent (9, 5) contenant entre elles un enroulement de mesure (7) est supérieure à la moitié du pas (P) des torons et inférieure à une fois et demie le pas (P) des torons.

10°/ Dispositif selon la revendication 9 caractérisé en ce que la distance (L) séparant le milieu de chaque dent (9, 5) contenant entre elles un enroulement de mesure (7) a une valeur de 30 mm pour la mesure de la vitesse de câbles métalliques (1) ayant de 15 à 50 torons par mètre de longueur.

*Fig. 1*

*Fig. 2*

2/2

Fig. 3

Fig. 4

# 0161959

## RAPPORT DE RECHERCHE EUROPEENNE

Office européen
des brevets

Numéro de la demande

EP 85 40 0701

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A-2 079 948 (EXPLORATION LOGGING) * Page 4, ligne 53 - page 5, ligne 29; figures 15,17 * | 1 | G 01 P 3/54 |
| A | | 6,8 | |
| | --- | | |
| Y | GB-A- 12 437 (SIEMENS et al.) * Page 1, ligne 41 - page 2, ligne 13; figures * | 1 | |
| A | | 2,3,8, 9 | |
| | --- | | |
| A | FR-A-2 112 298 (FIAT) * Page 3, ligne 36 - page 4, ligne 10; figures * | 3 | DOMAINES TECHNIQUES RECHERCHES (Int. Cl.4) |
| | --- | | G 01 P |
| A | US-A-4 095 177 (HARRIS) * Colonne 4, lignes 15-34; figure 8 * | 4 | |
| | --- | | |
| A | FR-A-1 229 620 (CYBERMECA) * Page 1, colonne 1, lignes 29-39; figures 1-3 * | 1,3 | |
| | --- | | |
| A | GB-A-1 320 903 (DEELEY) * Page 2, lignes 40-53; figure 2 * | 3-6 | |
| | ----- | | |

Le présent rapport de recherche a été établi pour toutes les revendications

| Lieu de la recherche | Date d'achèvement de la recherche | Examinateur |
|---|---|---|
| LA HAYE | 12-07-1985 | HANSEN P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82